# EUROPEAN PATENT SPECIFICATION

(11) **EP 4 450 261 B1**
(45) Date of publication and mention of the grant of the patent: **26.08.2026**
(21) Application number: 24171130.8
(22) Date of filing: 18.04.2024
(51) Int. Cl.: B29C 64/393, B29C 64/118, B33Y 10/00, B33Y 50/02, B33Y 30/00

(54) **METHOD AND APPARATUS OF MANUFACTURING PRODUCTS**
VERFAHREN UND VORRICHTUNG ZUR HERSTELLUNG VON PRODUKTEN
PROCÉDÉ ET APPAREIL DE FABRICATION DE PRODUITS

(30) Priority: 21.04.2023 IT 202300007989
(43) Date of publication of application: 23.10.2024
(73) Proprietor: C.M.S. S.p.A., 24019 Zogno (BG) (IT)
(72) Inventor: VIMERCATI, Claudio Giuseppe, 24010 Costa Serina (BG) (IT); BARERA, Giacomo, 20010 Bernate Ticino (MI) (IT)
(74) Representative: Luppi Intellectual Property S.r.l.

(56) References cited:
- EP-A1- 4 450 258
- EP-B1- 3 221 128
- US-B2- 10 518 480

## Description

### Background of the invention

The present invention relates to a method for manufacturing products by additive technique based on the extrusion of material, in particular thermoplastic material, and an apparatus that implements this method.

### Prior art

Apparatuses are known for manufacturing products by additive technique and, in particular, apparatuses are known for manufacturing products by additive technique based on the extrusion of material.

The latter include an extrusion head, which is movable in a controlled manner in space, provided with a nozzle and inside which a worm is arranged. The latter cooperates with the heaters of the material to be extruded. In the case of manufacturing products by additive technique based on the extrusion of material, the layers of the product are formed from a plurality of strands or beads of extruded material. During the manufacture of products by additive technique, a printing strategy is selected that is defined by a set of slicing parameters that involves the use of a computerized 3D model of the product to be manufactured and is associated with a total duration of the printing process.

Subsequently, the strategy is processed by dedicated software, for example slicing software, so as to translate the printing strategy into a printing path for each layer of the product to be manufactured and thus obtain a set of printing parameters for each layer of the product.

The set of slicing parameters and the set of printing parameters are closely linked to the type of additive technique. Nevertheless, it is not certain that the printing parameters supplied exiting the software are optimal, i.e. it is possible that the printing parameters do not enable a product to be obtained that has the desired mechanical features and/or appearance.

In fact, manufacturing products by additive technique is an extremely delicate process that depends on very many factors that often cannot be taken into account beforehand and are discovered only once the product has been manufactured or is being manufactured. It is accordingly necessary to correct the printing parameters so as to take into account the aforesaid factors and manufacture the product correctly.

This drawback mainly characterizes industrial manufacturing by additive technique based on the extrusion of material because, for example, the supplier may change the material, a different extruder from the one tested has to be used, the environment in which the product is manufactured is not controlled, etc.

Currently the adjustment of the printing parameters has to be repeated for each printing, entailing enormous manufacturing costs, both at the level of time spent on adjusting, and at the level of wasted products (and thus material). Adjusting the parameters in fact requires lengthy machine downtime and is often not definitive, thus leading to a certain number of faulty products before the correct product is obtained.

Document US10518480B2 discloses, according to its abstract, additive manufacturing systems using artificial intelligence that can identify an anomaly in a printed layer of an object from a generated topographical image of the printed layer. The additive manufacturing systems can also use artificial intelligence to determine a correlation between the identified anomaly and one or more print parameters, and adaptively adjust one or more print parameters. The additive manufacturing systems can also use artificial intelligence to optimize one or more printing parameters to achieve desired mechanical, optical and/or electrical properties.

It would therefore be auspicable to provide an alternative solution that is able to improve the prior art. In particular, a solution that is able to improve manufacturing products by additive technique based on the extrusion of material.

### Objects of the invention

One object of the present invention is to provide an alternative method for manufacturing products by additive technique based on the extrusion of material.

One object of the invention is to optimize the parameters generated by the slicing software so as to reduce the human intervention in modifying the actual parameters in the additive manufacturing machine.

One object of the invention is to offer a method for manufacturing products by additive technique based on the extrusion of material that is easily implementable.

One object of the present invention is to provide an apparatus for manufacturing products by additive technique based on the extrusion of material.

Other objects of the present invention are reducing process times and improving the reliability of the process.

### Brief description of the invention

The aforesaid objects are achieved by a method for manufacturing products by additive technique based on the extrusion of material according to claim 1 and an apparatus according to claim 12.

In one embodiment, the method in question involves printing a plurality of products by an additive manufacturing machine (or printing machine) controlled by slicing software and producing a record of all the printings made by the machine by creating a database that comprises a set of slicing parameters supplied to the slicing software, a set of printing parameters generated by the slicing software, and the sets of printing parameters that are modified after or during each printing. The method involves comparing the set of printing parameters generated by the slicing with the sets of modified printing parameters, to modify accordingly the slicing software, in particular to modify the parameters of the slicing software that generate the printing parameters, for future printing, also for products that are different from one another (but in general with the same material).

Each set of printing parameters used for printing may be modified in the next printing, or during the same printing, for example after printing a layer of the product so as to use the modified printing parameters for the subsequent layers of the same product.

The set of slicing parameters may comprise, in particular, the printing direction (i.e. the orientation of the extrusion nozzle), the layer height and the layer width and it comprises the width and height of the strands. The set of printing parameters comprises the speed of the printing head and the rotation of the extruding screw and the layer-deposition time.

The method involves saving in a database all the modifications made to the printing parameters (or only the modifications deemed to be improvements) to then use the record to modify the parameters of the slicing software, i.e. to improve the theoretical values supplied by the slicing software.

This enables the human intervention to be reduced in modifying the actual operating parameters of the additive manufacturing machine.

In practice, the record created with the data on the printing of a plurality of products (in general with the same material) is processed to modify the modifiable parameters of the slicing software (the software element parameters being generally set) to minimize in future the modifications to the operating parameters of the printing machine, also for printing products of different shapes and dimensions (in general for products of the same material and with printing directions or strategies that are the same or similar).

Storage of the parameters may also continue when the parameters are no longer modified (i.e. when the parameters can be considered to be optimized). In other words, the set of parameters optimized during printing becomes part of the record of the database together with all the other sets of parameters.

The database that is collected may be used, in particular, to improve future printing of different products.

### Brief description of the drawings

The invention can be better understood and implemented with reference to the appended drawings that illustrate an embodiment thereof by way of non-limiting example, in which:
figure 1 is a diagram of a method for manufacturing products by additive technique according to the invention;
figure 2 is a schematic representation of an apparatus for manufacturing products by additive technique that implements the method schematized in figure 1.

### Detailed description

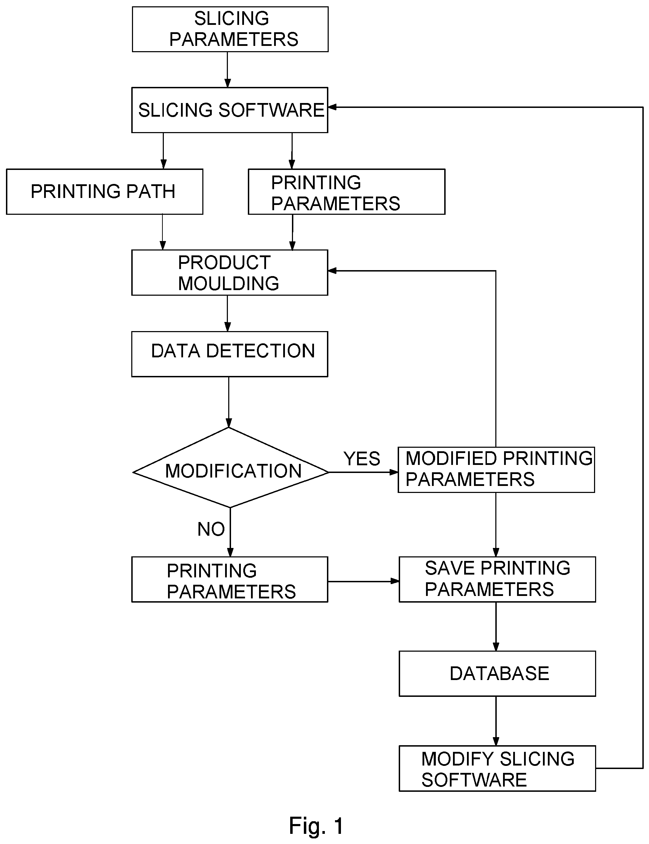

With reference to figure 1, a method is disclosed below for manufacturing products by additive technique, i.e. by depositing successive layers of material, based on the extrusion of material.

Each layer of the product is formed of a plurality of strands S or beads of extruded material from an extrusion head 11 provided with a nozzle 14 for depositing the aforesaid strands S. The extrusion head 11 includes a worm 12 and heaters 13 for heating the material to be extruded.

The method involves generating a set of slicing parameters that is associated with a computerized 3D model of a product to be made and with a total printing time, i.e. with the total duration of the printing process. In general, different sets of slicing parameters correspond to different products.

The set of slicing parameters may include, in particular, the width of the nozzle 14. The set of slicing parameters includes the width and the height of the strands S.

The set of slicing parameters may include, in particular, the overlapping percentage of the strands S. In detail, the overlapping percentage of the strands S is 0% in the case of adjacent strands S whereas it is 100% in the case of totally overlapping strands S. Thus, in the case of partially overlapping strands S the overlapping percentage of strands S is comprised between 0 and 100%.

The set of slicing parameters may also include the material used. In particular, the material, for example, may be chosen from a group that comprises: acrylonitrile butadiene styrene (ABS), aliphatic polyamides (PA), polylactic acid (PLA), polypropylene (PP), polycarbonate (PC), polyethylene terephthalate (PET), polyethylene terephthalate glycol-modified (PETG), polyetherimide (PEI), polysulfone (PESU), single or also reinforced with for example, glass fibre and/or carbon.

The set of slicing parameters may include, in particular, the flowrate of the extrusion material and/or the extrusion start offset distance and/or the "coasting" distance (extrusion stop before the end of the loop).

The set of slicing parameters may include, in particular, the "infill" percentage and/or the value of the "flow multiplier" (expressed as %) to adapt the relation between printing speed and flowrate.

The set of slicing parameters may include, in particular, a geometric off-set, i.e. a correction factor that depends on the excess material necessary for offsetting possible removal processing. The set of slicing parameters may include, in particular, a temporal off-set, i.e. a correction factor that allows for a time delay linked to the behaviour dynamics of the material in the extrusion head.

The method involves defining, by a slicing software, a printing path for each layer of the product. By the slicing software it is possible to obtain, from the aforesaid set of slicing parameters, a set of printing parameters for each layer of the product to be manufactured, i.e. a group of sets of printing parameters can be obtained from the set of slicing parameters. The slicing software converts the set of slicing parameters into printing instructions that can be run for each layer.

The slicing software converts from sets of slicing parameters to sets of printing parameters on the basis of modifiable conversion parameters (also known as "generating constants") that associate in a two-way manner the set of slicing parameters together with sets of printing parameters.

The set of printing parameters includes the time taken to deposit the layer and the rotation speed of the worm 12 and the movement speed of the extrusion head 11.

The set of printing parameters may include, in particular, one or more of the following geometric parameters (values calculated and known in the additive manufacturing industry by slicing software): "layer section" and "material fraction".

The set of printing parameters may include, in particular, one or more geometric parameters of the layers, for example length and thickness of the walls of the layers, and/or the printing stand-by time (also called "wait time"), i.e. the stand-by time between making one layer and the next layer.

Below, the method involves making at least one product using the aforesaid group of sets of printing parameters.

The data on the features of each layer of the product are then detected.

In particular, the features include geometric features and/or dimensional and/or qualitative and/or structural features.

Following this detection, and in function of this detection, for each layer the set of printing parameters is thus obtained by modifying a modified set of printing parameters for each layer. By so doing, a modified group of sets of machine parameters is obtained. The aforesaid modified group of sets of printing parameters may be used subsequently to print a further product, or may be used in real time on the same product being processed, i.e. the machine can continue to work on the product being processed to print the subsequent layers already with the modified printing parameters.

At this point, the method involves repeating the steps of detecting the data on the features of each layer of the product, of modifying the group of sets of printing parameters, and of continuation of printing parameters (for printing the further layers of the product being processed and/or of a further product) using the modified group of sets of printing parameters for as long as not modification is made, i.e. at least until an optimized set of printing parameters for each layer is obtained, i.e. a group of optimized sets of printing parameters is obtained for each layer, i.e. an optimized group of sets of parameters. It is thus possible to continue the use of the additive manufacturing machine for subsequent processing using the optimized group of sets of printing parameters.

A record is further made of the various printings by using a database that contains the aforesaid set of slicing parameters, the aforesaid set of printing parameters generated by the slicing software, and the sets of modified printing parameters for each printing (with all the modifications made or with the only modifications made that have been considered to be improvements), including the possible optimized set of printing parameters.

Saving, in particular, is achieved by saving the various parameters to a physical storage device and/or to a cloud.

It is observed that the modifications are saved to the database (possibly only the modifications deemed to be correct because they are actually improvements) for all the products made with the previous printings. The record of the produced printings (in particular those produced with the same material) is reprocessed to modify the generation constants of the parameters in the slicing software (i.e. the aforesaid modifiable conversion parameters) so as to minimize further modifications to the additive manufacturing machine also in different components. Further, although no more modifications of the parameters occur, the latter are in all cases stored.

As said, it is possible to modify the conversion parameters of the slicing software, in particular in order to make the group of optimized sets of printing parameters correspond to the set of slicing parameters in two ways.

It is emphasised that the aforesaid optimized set of parameters that is optimized during printing becomes part of the record of the database together with all the other parameters. The method may detect the discrepancies compared with the theoretical set generated by the slicing software and can modify the generating constants of the parameters to obtain from the slicing software parameters nearer the optimized set, in view of future printing, also of different products.

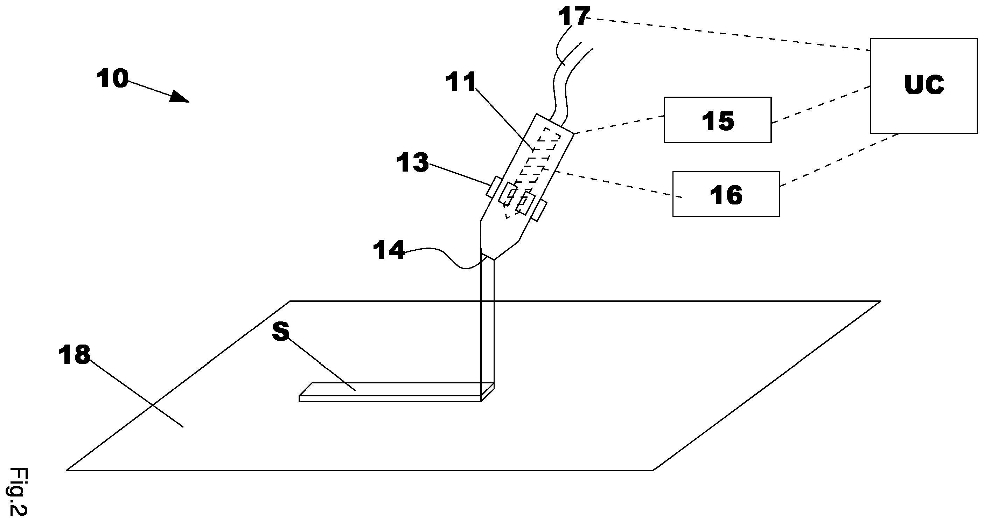

With reference to figure 2, we now consider an apparatus, indicated generally by 10, for manufacturing products by additive technique that is provided with an extrusion head 11 configured to deposit layers of material, i.e. an apparatus 10 for manufacturing products by additive technique based on the extrusion of material.

The extrusion head 11 is provided with a worm 12 and heaters 13 for heating the material to be extruded. Further, the extrusion head 11 is provided with a nozzle 14 for depositing strands S of the material, which constitute the various layers of the product. In other terms, one layer of the product is formed of one or more strands adjacent or connected to one another by one or more other strands. The apparatus 10 may include, in particular, a moulding base 18 on which the strands S are deposited for making products.

The apparatus 10 is provided with spatial movement means 15 for moving the extrusion head 11. For example, the spatial movement means 15 may include an articulated robotic arm at the end of which the extrusion head 11 is arranged.

The apparatus 10 is provided with rotation means 16 for rotating the worm 12. In one non-limiting embodiment, the rotation means 16 includes an electric motor coupled with a worm 12 reduction gear.

The apparatus 10 has feed means 17 for feeding the material to the extrusion head 11. For example, the feed means 17 includes a doser and a hopper, the latter having a first opening communicating with the doser and a second opening communicating with the inside of the extrusion head 11 so as to subject the material to be extruded to the action of the worm 12 and of the heaters 13.

The apparatus 10 is provided with a control unit UC for controlling the spatial movement means 15 and the rotation means 16 and the feed means 17 and the heaters 13.

The control unit UC is provided with modifiable slicing software, and is configured to define a printing path and obtain a set of printing parameters for each layer of said product, starting from a set of slicing parameters.

In particular, the slicing software converts from sets of slicing parameters to sets of printing parameters on the basis of the modifiable conversion parameters that associate in two ways the set of slicing parameters with the group of sets of printing parameters.

The control unit UC may be configured to save the aforesaid sets of parameters (of slicing, of printing generated by the slicing software and of modified printing for each layer and for each product manufactured). In particular, the control unit UC may be provided with a physical storage device and/or may be connected to a cloud to save the aforesaid sets of parameters (of slicing, of printing generated by the slicing software and of modified printing for each state and for each product manufactured).

The set of printing parameters for each layer includes the layer depositing time, the rotation speed of the worm 12, the movement speed of the extrusion head 11. The set of printing parameters may include the printing stand-by time ("wait time") and the geometric parameters of the layer.

The set of slicing parameters may include, in particular, the total printing time and/or the width of the nozzle 14 and/or the overlapping percentage of the strands S. The set of slicing parameters includes width and height of the strands S.

The set of slicing parameters may include, in particular, the material used (acrylonitrile butadiene styrene (ABS) and/or aliphatic polyamides (PA) and/or polylactic acid (PLA) and/or polypropylene (PP) and/or polycarbonate (PC) and/or polyethylene terephthalate (PET) and/or polyethylene terephthalate glycol-modified (PETG) and/or polyetherimide (PEI) and/or polysulfone (PESU), single or reinforced with, for example, glass fibre and/or carbon.

The set of slicing parameters may include, in particular, the flowrate of the extrusion material and/or the extrusion start offset distance and/or the "coasting" distance (extrusion stop before the end of the loop) and/or the "infill" percentage and/or the value of the "flow multiplier" (expressed as %) to adapt the relation between printing speed and flowrate. The set of slicing parameters may include, in particular, a geometric off-set and/or a temporal off-set.

The operation of the apparatus 10 is disclosed below.

Initially, an operator generates a set of slicing parameters that is processed by the control unit UC, thus obtaining a printing path and a set of printing parameters (generated by the slicing software) for each layer.

Subsequently, the control unit UC commands the spatial movement means 15, the rotation means 16, the feed means 17 and the heaters 13 in accordance with the aforesaid group of sets of printing parameters and a product is printed.

The operator analyses each layer of the product in order to detect data on geometric features and/or dimensional and/or qualitative and/or structural features of each layer.

In an alternative embodiment, the data detecting step may be performed by a detecting unit controlled by the control unit UC.

After which, the operator modifies, in function of the data detected, the group of sets of printing parameters; a modified group of sets of printing parameters is thus obtained.

This modification to the printing parameters, made in a given moment by the machine to proceed to printing a product, may also be made in real time during depositing of a layer of the product and the modified printing parameters may be used to deposit the next layer.

One embodiment of this modification operation is represented by a first parameter, by which the operator can modify the movement speed of the extrusion head 11 used at any moment to print the product, and/or by a second parameter, by which the operator can modify the rotation speed of the extrusion screw (worm 12) used in a given moment to print the product, obtaining the modified printing parameters. Such modified printing parameters will be used by the machine as printing parameters for the subsequent layers (for the same product).

During printing of each layer, the operator can repeat the modification operation for modifying the current printing parameters, according to the result that it is desired to obtain for the current layer or for the subsequent layers.

For example, if the strands are too narrow, the operator can reduce the movement speed of the extrusion head 11 in order to increase the width of the strands.

At this point, the control unit UC controls one or more actuators of the machine (the spatial movement means 15, the rotation means 16, the feed means 17 and the heaters 13) according to the aforesaid modified group of sets of printing parameters, and printing is continued (i.e. printing of the remaining layers of the product being processed and/or printing of a further product).

The operations are then repeated of detecting data on the features of each layer of the product, of modifying the group of sets of printing parameters, and of continuing printing (making further layers from the same product being processed and/or for a further product) using the modified group of sets of printing parameters. It is possible to update the printing parameters, and thus the database that forms the record of the printings made, also in real time, i.e. whilst the machine is manufacturing a product between printing one layer and printing the next layer.

The cycle may be repeated to obtain a certain number of products, also until the operator no longer makes any modification, i.e. until an optimized group of sets of printing parameters is obtained.

The control unit UC is configured to create a record from a database in which are saved the set of slicing parameters supplied to the slicing software, the set of printing parameters generated by the slicing software and the sets of printing parameters (all or only those considered to be improvements) that are modified after each printing.

The control unit UC is configured, in particular, to save the modified group of sets of printing parameters for all the layers and for all the products, making a database that couples said modified group of sets of printing parameters with said set of slicing parameters.

The method involves comparing the set of printing parameters generated by the slicing and with the set of modified printing parameters to modify accordingly the slicing software, in particular to modify the parameters of the slicing software (conversion parameters) that generate the printing parameters, for future printing, also for products that are different from one another (but in general with the same material).

It is emphasised that the method involves modifying the parameters in the course of the printing process. The modifications made are saved in the database in real time for each layer. Further, as said, the method means that optimization (i.e. modification of the conversion parameters of the slicing software for improving printing) is performed on the basis of a record obtained from items that are different from one another that generally share the fact of being made from the same printed material.

From what has been described above, the method and the apparatus for manufacturing products by additive technique based on the extrusion of material achieve all the set objects by overcoming the prior art drawbacks.

In particular, the method is easily implementable in an apparatus for manufacturing products by additive technique based on the extrusion of material.

Further, the invention enables fine adjustment to be achieved easily of the printing parameters in a few steps.

Further, the invention enables a correction of the printing parameters to be achieved easily, achieving optimization of the parameters on the basis of printing the record generated during printing of the various products. Modifying the theoretical parameters generated by the slicing software is performed during printing in the machine (the modifications may be, merely by way of example, modifying the rotation speed of the extruder for a certain layer to modify the width of the strand, or reduce the speed of the printing head because the temperature is too high, etc).

The modifications made (in particular, only those that are considered to be improvements) are saved and used, together with the data previously gathered during other printings, to correct the operating parameters, in particular the parameters that determine the flowrate of the extrusion material and the speed of the printing head.

Further, owing to saving of the set of optimized printing parameters a database is created with the sets of slicing parameters and the sets of printing parameters modified for each layer and each product.

It is emphasised that the method in question enables the operator to save modified parameters in the database if they are considered to be correct and the operator cannot save modified parameters in the database if they are considered to be incorrect, so the additive manufacturing machine will be able to use the database in future with the parameters considered to be correct if the product to be manufactured is the same or similar in terms of material and strategy or printing direction (i.e. by the orientation of the extrusion nozzle 14, in general 0°-45°-90° with respect to a substantially vertical axis Z, in which 90° is a substantially horizontal direction).

The operator can thus consult the database at any moment, further speeding up production and at the same time reducing waste.

## Claims

1. Method of manufacturing products using an additive technique based on the extrusion of material, wherein each layer of a product is formed by at least one strand (S) of material extruded from an extrusion head (11) equipped with a nozzle (14) for the deposition of said strand (S) and a worm (12) and heaters (13) for heating the material, said method comprising the steps of:
i) generating a set of slicing parameters comprising width and height of said at least one strand (S);
ii) defining a printing path for each layer of said product based on said set of slicing parameters by means of slicing software;
iii) obtaining a set of printing parameters for each layer of said product by means of said slicing software, obtaining a group of sets of printing parameters, said set of printing parameters comprising at least a layer-deposition time, a rotation speed of said worm (12) and a movement speed of said extrusion head (11);
iv) making at least one layer of a product using said group of sets of printing parameters;
v) detecting data on features of said at least one layer;
vi) modifying said group of sets of printing parameters to obtain a modified set of printing parameters for said at least one layer;
vii) making at least one further layer of said product using said modified set of printing parameters;
viii) storing said modified set of printing parameters;
ix) repeating said steps v-viii at least until the production of said product by generating a historical series with a database which includes at least said modified and saved sets of printing parameters for all the made layers;
x) comparing said group of sets of printing parameters obtained from said slicing software with said modified and saved sets of printing parameters and modifying said slicing software on the basis of said comparison.

2. Method according to claim 1, wherein said set of slicing parameters and said group of sets of printing parameters obtained by means of said slicing software are also stored in said database.

3. Method according to claim 1 or 2, wherein said set of slicing parameters comprises at least one printing direction.

4. Method according to any one of the preceding claims, wherein said set of slicing parameters comprises at least a width of said nozzle (14) and/or an overlapping percentage of said strands (S) and/or a total printing time.

5. Method according to any one of the preceding claims, wherein said set of slicing parameters comprises at least one used material.

6. Method according to any one of the preceding claims, wherein said set of slicing parameters comprises a temporal offset and/or a geometric offset and/or an extrusion start offset distance and/or a "coasting" distance.

7. Method according to any one of the preceding claims, wherein said set of slicing parameters comprises at least one flow rate of the extrusion material and/or an "infill" percentage.

8. Method according to any one of the preceding claims, wherein said set of printing parameters comprises a printing stand-by time of said layer.

9. Method according to any one of the preceding claims, wherein said set of printing parameters comprises one or more geometric parameters of said layer.

10. Method according to any one of the preceding claims, wherein said features of each layer of said product comprise geometric and/or dimensional and/or qualitative and/or structural features of each layer.

11. Method according to any one of the preceding claims, wherein said step of storing is performed by means of a physical storage device and/or a cloud.

12. Apparatus for manufacturing products by means of additive technique based on the extrusion of material, comprising:
- an extrusion head (11) configured to perform a deposition of layers of material(s), said extrusion head (11) comprising a worm (12) and material heaters (13), said extrusion head comprising a nozzle (14) for the deposition of strands (S) of the material;
- spatial movement means (15) for moving said extrusion head (11);
- rotation means (16) for rotating said worm (12);
- feed means (17) for feeding said material;
- a control unit (UC) to control said spatial movement means (15), said rotation means (16), said feed means (17) and said heaters (13);
in which said control unit (UC) comprises modifiable slicing software and is configured to define a printing path and obtain a set of printing parameters for each layer of said product starting from a set of slicing parameters, said set of printing parameters comprising layer deposition time, rotation speed of said worm (12) and movement speed of said extrusion head (11), said set of slicing parameters comprising width and a height of said strands (S), said control unit (UC) being configured to store said slicing and print parameters.

13. Apparatus according to claim 12, wherein said set of slicing parameters comprises at least one printing direction and/or a width of said nozzle (14) and/or a percentage of overlapping of said strands (S) and/or a material used and/or a time offset and/or a geometric offset and/or an extrusion start offset distance and/or a "coasting" distance and/or a flow rate of the extrusion material and/or an "infill" percentage and/or a total printing time.

14. Apparatus according to claim 12 or 13, wherein said set of printing parameters comprises a printing stand-by time and/or one or more geometrical parameters of said layers.

## Patentansprüche

1. Verfahren zum Fertigen von Produkten unter Verwendung einer additiven Technik basierend auf der Extrusion von Material, wobei jede Schicht eines Produkts durch mindestens einen Strang (S) aus Material ausgebildet wird, der aus einem Extrusionskopf (11) extrudiert wird, der mit einer Düse (14) für die Ablage des Strangs (S) und einem Schneckengewinde (12) und Heizelementen (13) zum Erhitzen des Materials ausgestattet ist, das Verfahren umfassend die Schritte:
i) Erzeugen eines Satzes von Slicing-Parametern, umfassend Breite und Höhe des mindestens einen Strangs (S);
ii) Definieren eines Druckpfads für jede Schicht des Produkts basierend auf dem Satz von Slicing-Parametern mittels Slicing-Software;
iii) Erhalten eines Satzes von Druckparametern für jede Schicht des Produkts mittels der Slicing-Software, Erhalten einer Gruppe von Sätzen von Druckparametern, der Satz von Druckparametern umfassend mindestens eine Schichtablagezeit, eine Drehgeschwindigkeit des Schneckengewindes (12) und eine Bewegungsgeschwindigkeit des Extrusionskopfes (11);
iv) Herstellen mindestens einer Schicht eines Produkts unter Verwendung der Gruppe von Sätzen von Druckparametern;
v) Erfassen von Daten über Merkmale der mindestens einen Schicht;
vi) Modifizieren der Gruppe von Sätzen von Druckparametern, um einen modifizierten Satz von Druckparametern für die mindestens eine Schicht zu erhalten;
vii) Herstellen mindestens einer weiteren Schicht des Produkts unter Verwendung des modifizierten Satzes von Druckparametern;
viii) Speichern des modifizierten Satzes von Druckparametern;
ix) Wiederholen der Schritte v-viii mindestens bis zu der Produktion des Produkts durch Erzeugen einer historischen Reihe mit einer Datenbank, die mindestens die modifizierten und gespeicherten Sätze von Druckparametern für alle der hergestellten Schichten einschließt;
x) Vergleichen der Gruppe von Sätzen von Druckparametern, die von der Slicing-Software erhalten werden, mit den modifizierten und gespeicherten Sätzen von Druckparametern und Modifizieren der Slicing-Software auf der Basis des Vergleichs.

2. Verfahren nach Anspruch 1, wobei der Satz von Slicing-Parametern und die Gruppe von Sätzen von Druckparametern, die mittels der Slicing-Software erhalten werden, auch in der Datenbank gespeichert sind.

3. Verfahren nach Anspruch 1 oder 2, wobei der Satz von Slicing-Parametern mindestens eine Druckrichtung umfasst.

4. Verfahren nach einem der vorstehenden Ansprüche, wobei der Satz von Slicing-Parametern mindestens eine Breite der Düse (14) und/oder einen Überlappungsprozentsatz der Stränge (S) und/oder eine Gesamtdruckzeit umfasst.

5. Verfahren nach einem der vorstehenden Ansprüche, wobei der Satz von Slicing-Parametern mindestens ein verwendetes Material umfasst.

6. Verfahren nach einem der vorstehenden Ansprüche, wobei der Satz von Slicing-Parametern einen zeitlichen Versatz und/oder einen geometrischen Versatz und/oder einen Extrusionsstartversatzabstand und/oder einen "Coasting"-Abstand umfasst.

7. Verfahren nach einem der vorstehenden Ansprüche, wobei der Satz von Slicing-Parametern mindestens eine Strömungsgeschwindigkeit des Extrusionsmaterials und/oder einen "Infill"-Prozentsatz umfasst.

8. Verfahren nach einem der vorstehenden Ansprüche, wobei der Satz von Druckparametern eine Druck-Bereitschaftszeit der Schicht umfasst.

9. Verfahren nach einem der vorstehenden Ansprüche, wobei der Satz von Druckparametern einen oder mehrere geometrische Parameter der Schicht umfasst.

10. Verfahren nach einem der vorstehenden Ansprüche, wobei die Merkmale jeder Schicht des Produkts geometrische und/oder dimensionale und/oder qualitative und/oder strukturelle Merkmale jeder Schicht umfassen.

11. Verfahren nach einem der vorstehenden Ansprüche, wobei der Schritt des Speicherns mittels einer physischen Speichervorrichtung und/oder einer Cloud durchgeführt wird.

12. Vorrichtung zum Fertigen von Produkten mittels additiver Technik basierend auf der Extrusion von Material, umfassend:
- einen Extrusionskopf (11), der konfiguriert ist, um eine Ablage von Schichten von Material(ien) durchzuführen, der Extrusionskopf (11) umfassend ein Schneckengewinde (12) und Materialheizelemente (13), der Extrusionskopf umfassend eine Düse (14) für die Ablage von Strängen (S) des Materials;
- räumliche Bewegungsmittel (15) zum Bewegen des Extrusionskopfes (11);
- Drehmittel (16) zum Drehen des Schneckengewindes (12);
- Zuführmittel (17) zum Zuführen des Materials;
- eine Steuereinheit (UC), um die räumlichen Bewegungsmittel (15), die Drehmittel (16), die Zuführmittel (17) und die Heizelemente (13) zu steuern;
wobei die Steuereinheit (UC) modifizierbare Slicing-Software umfasst und konfiguriert ist, um einen Druckpfad zu definieren und einen Satz von Druckparametern für jede Schicht des Produkts ausgehend von einem Satz von Slicing-Parametern zu erhalten, der Satz von Druckparametern umfassend eine Schichtablagezeit, eine Drehgeschwindigkeit des Schneckengewindes (12) und eine Bewegungsgeschwindigkeit des Extrusionskopfes (11), der Satz von Slicing-Parametern umfassend eine Breite und eine Höhe der Stränge (S), wobei die Steuereinheit (UC) konfiguriert ist, um die Slicing- und Druckparameter zu speichern.

13. Einrichtung nach Anspruch 12, wobei der Satz von Slicing-Parametern mindestens eine Druckrichtung und/oder eine Breite der Düse (14) und/oder einen Prozentsatz der Überlappung der Stränge (S) und/oder ein verwendetes Material und/oder einen Zeitversatz und/oder einen geometrischen Versatz und/oder einen Extrusionsstartversatzabstand und/oder einen "Coasting"-Abstand und/oder eine Strömungsgeschwindigkeit des Extrusionsmaterials und/oder einen "Infill"-Prozentsatz und/oder eine Gesamtdruckzeit umfasst.

14. Einrichtung nach Anspruch 12 oder 13, wobei der Satz von Druckparametern eine Druck-Bereitschaftszeit und/oder einen oder mehrere geometrische Parameter der Schichten umfasst.

## Revendications

1. Procédé de fabrication de produits à l'aide d'une technique additive basée sur l'extrusion de matériau, dans lequel chaque couche d'un produit est formée par au moins un brin (S) de matériau extrudé à partir d'une tête d'extrusion (11) équipée d'une buse (14) pour le dépôt dudit brin (S) et d'une vis sans fin (12) et d'éléments chauffants (13) pour chauffer le matériau, ledit procédé comprenant les étapes consistant à:
i) générer un ensemble de paramètres de découpe comprenant une largeur et une hauteur dudit au moins un brin (S);
ii) définir un chemin d'impression pour chaque couche dudit produit en fonction dudit ensemble de paramètres de découpe au moyen d'un logiciel de découpe;
iii) obtenir un ensemble de paramètres d'impression pour chaque couche dudit produit au moyen dudit logiciel de découpe, obtenir un groupe d'ensembles de paramètres d'impression, ledit ensemble de paramètres d'impression comprenant au moins un temps de dépôt de couche, une vitesse de rotation de ladite vis sans fin (12) et une vitesse de déplacement de ladite tête d'extrusion (11);
iv) réaliser au moins une couche d'un produit à l'aide dudit groupe d'ensembles de paramètres d'impression;
v) détecter des données sur des caractéristiques de ladite au moins une couche;
vi) modifier ledit groupe d'ensembles de paramètres d'impression pour obtenir un ensemble modifié de paramètres d'impression pour ladite au moins une couche;
vii) réaliser au moins une couche supplémentaire dudit produit à l'aide dudit ensemble modifié de paramètres d'impression;
viii) stocker ledit ensemble modifié de paramètres d'impression;
ix) répéter lesdites étapes v-viii au moins jusqu'à la production dudit produit en générant une série historique avec une base de données qui comporte au moins lesdits ensembles modifiés et sauvegardés de paramètres d'impression pour toutes les couches réalisées;
x) comparer ledit groupe d'ensembles de paramètres d'impression obtenus dudit logiciel de découpe avec lesdits ensembles modifiés et sauvegardés de paramètres d'impression et modifier ledit logiciel de découpe sur la base de ladite comparaison.

2. Procédé selon la revendication 1, dans lequel ledit ensemble de paramètres de découpe et ledit groupe d'ensembles de paramètres d'impression obtenus au moyen dudit logiciel de découpe sont également stockés dans ladite base de données.

3. Procédé selon la revendication 1 ou 2, dans lequel ledit ensemble de paramètres de découpe comprend au moins une direction d'impression.

4. Procédé selon l'une quelconque des revendications précédentes, dans lequel ledit ensemble de paramètres de découpe comprend au moins une largeur de ladite buse (14) et/ou un pourcentage de chevauchement desdits brins (S) et/ou un temps d'impression total.

5. Procédé selon l'une quelconque des revendications précédentes, dans lequel ledit ensemble de paramètres de découpe comprend au moins un matériau utilisé.

6. Procédé selon l'une quelconque des revendications précédentes, dans lequel ledit ensemble de paramètres de découpe comprend un décalage temporel et/ou un décalage géométrique et/ou une distance de décalage de début d'extrusion et/ou une distance de « roue libre » (coasting).

7. Procédé selon l'une quelconque des revendications précédentes, dans lequel ledit ensemble de paramètres de découpe comprend au moins un débit du matériau d'extrusion et/ou un pourcentage de «remplissage» (infill).

8. Procédé selon l'une quelconque des revendications précédentes, dans lequel ledit ensemble de paramètres d'impression comprend un temps de veille d'impression de ladite couche.

9. Procédé selon l'une quelconque des revendications précédentes, dans lequel ledit ensemble de paramètres d'impression comprend un ou plusieurs paramètres géométriques de ladite couche.

10. Procédé selon l'une quelconque des revendications précédentes, dans lequel lesdites caractéristiques de chaque couche dudit produit comprennent des caractéristiques géométriques et/ou dimensionnelles et/ou qualitatives et/ou structurelles de chaque couche.

11. Procédé selon l'une quelconque des revendications précédentes, dans lequel ladite étape de stockage est effectuée au moyen d'un dispositif de stockage physique et/ou d'un nuage.

12. Appareil permettant de fabriquer des produits au moyen d'une technique additive basée sur l'extrusion de matériau, comprenant:
- une tête d'extrusion (11) conçue pour effectuer un dépôt de couches de matériau(x), ladite tête d'extrusion (11) comprenant une vis sans fin (12) et des éléments chauffants de matériau (13), ladite tête d'extrusion comprenant une buse (14) pour le dépôt de brins (S) du matériau;
- un moyen de déplacement spatial (15) pour déplacer ladite tête d'extrusion (11);
- un moyen de rotation (16) pour faire tourner ladite vis sans fin (12);
- un moyen d'alimentation (17) pour alimenter ledit matériau;
- une unité de commande (UC) pour commander ledit moyen de déplacement spatial (15), ledit moyen de rotation (16), ledit moyen d'alimentation (17) et lesdits éléments chauffants (13);
dans lequel ladite unité de commande (UC) comprend un logiciel de découpe modifiable et est configurée pour définir un chemin d'impression et obtenir un ensemble de paramètres d'impression pour chaque couche dudit produit à partir d'un ensemble de paramètres de découpe, ledit ensemble de paramètres d'impression comprenant un temps de dépôt de couche, une vitesse de rotation de ladite vis sans fin (12) et une vitesse de déplacement de ladite tête d'extrusion (11), ledit ensemble de paramètres de découpe comprenant une largeur et une hauteur desdits brins (S), ladite unité de commande (UC) étant configurée pour stocker lesdits paramètres de découpe et d'impression.

13. Appareil selon la revendication 12, dans lequel ledit ensemble de paramètres de découpe comprend au moins une direction d'impression et/ou une largeur de ladite buse (14) et/ou un pourcentage de chevauchement desdits brins (S) et/ou un matériau utilisé et/ou un décalage temporel et/ou un décalage géométrique et/ou une distance de décalage de début d'extrusion et/ou une distance de « roue libre » et/ou un débit du matériau d'extrusion et/ou un pourcentage de «remplissage» et/ou un temps d'impression total.

14. Appareil selon la revendication 12 ou 13, dans lequel ledit ensemble de paramètres d'impression comprend un temps de veille d'impression et/ou un ou plusieurs paramètres géométriques desdites couches.
